# EUROPEAN PATENT SPECIFICATION

(11) **EP 3 112 737 B1**
(45) Date of publication and mention of the grant of the patent: **04.09.2019**
(21) Application number: 15380023.0
(22) Date of filing: 03.07.2015
(51) Int. Cl.: F16L 37/12

(54) **COUPLING ARRANGEMENT WITH COUPLING BODIES AND COUPLING BRACKET FOR PIPES**
KUPPLUNGSVORRICHTUNG MIT KUPPLUNGSKÖRPERN UND KUPPLUNGSHALTERUNG FÜR ROHRE
AGENCEMENT DE COUPLAGE AVEC DES CORPS DE COUPLAGE ET PATTE DE RACCORDEMENT POUR TUYAUX

(43) Date of publication of application: 04.01.2017
(73) Proprietor: MANN+HUMMEL GmbH, 71636 Ludwigsburg (DE)
(72) Inventor: Sánchez, Jorge, 50.010 Zaragoza (ES)

(56) References cited:
- EP-A1- 2 848 280
- US-A1- 2005 200 126
- US-A1- 2006 175 832
- US-A1- 2011 148 107

## Description

### Technical Field

The invention relates to a coupling arrangement with coupling bodies and a coupling bracket for pipes, in particular for establishing a quasi-rigid connection between pipes.

### Prior Art

US 2006/175832 A presents a coupler comprising a housing including an accommodating means into which an end section of a preferably rigid conduit, which includes at least one securing collar radially projecting relative to the conduit and preferably extending in circumferential direction of the conduit, can be inserted in a direction of insertion, and comprising a retaining means with which the inserted conduit can be secured in a direction opposite to the direction of insertion.

DE 10055348 C2 discloses a pipe-mounting connection for pipes that involves an inner sleeve in which a pipe is pushed, an outer sleeve that sits over the inner sleeve and a pipe supports that have corresponding fixture or locking means that facilitate fixture of the outer sleeve to the pipe supports. There are radial outwardly-oriented notch projections on the outer circumference of the outer sleeve which grip together with associated axially-oriented mounting guides on the outer circumference of the pipe supports and are secured via a locking spring held on the pipe supports. Both are formed, with a pressure tool, from a sheet plate with the outer sleeve being formed in a cavity. The notch projections are formed from the wall material of the outer sleeve that extend radially outwards.

Quick connectors such as the so-called VDA and HENN connectors are widely used for charge air ducting, where they typically connect two ducts together, or a duct to an intercooler or throttle body. These are normally used for connections to be assembled by the vehicle manufacturer. Nevertheless, they usually connect two rigid parts, made of metal or injection plastic. Charge air ducts are usually conformed by several subassemblies or "sub-ducts" that are connected together by means of clamping or welding. Clamping requires deformable materials to allow the pressure from the clamp to achieve a strong connection, with some rubber sealing that is also compressed by the clamp, while welding requires material compatibility. This usually means engineering materials with normally high costs and restriction with the supplier.

### Disclosure of the Invention

It is an object of the invention to provide an economic coupling arrangement which enables quick mounting and which is particularly useful for quasi-rigid connections between pipes.

Another object is to provide coupling bodies and a coupling bracket for quick mounting and establishing a quasi-rigid connection between pipes.

According to a first aspect of the invention the object is achieved by a coupling arrangement according to claim 1, having a first coupling body, a second coupling body and a coupling bracket, with one of the coupling bodies being insertable with a body portion into a body portion of the other of the coupling bodies with its front end through a front end of the receiving coupling body, where the coupling bodies provide corresponding catching means for establishing a connection between the coupling bodies. Further the coupling bracket is configured to cover at least a part of one of the coupling bodies being inserted into the other of the coupling bodies, where at least the receiving one of the coupling bodies provides catching means for establishing a connection to the coupling bracket, and the coupling bracket provides corresponding catching means for establishing a connection between the coupling bracket and at least the receiving one of the coupling bodies.

The other claims, the description and the drawings describe advantageous embodiments of the invention.

A coupling arrangement having a first coupling body, a second coupling body and a coupling bracket is proposed, with one of the coupling bodies being insertable with a body portion into a body portion of the other of the coupling bodies with its front end through a front end of the receiving coupling body, where the coupling bodies provide corresponding catching means for establishing a connection between the coupling bodies, in particular for establishing a connection between at least parts of the coupling bodies being in mutual engagement. The coupling bodies provide a mutual first geometrical position for introducing the insertable coupling body into the receiving coupling body and the coupling bodies provide a mutual second geometrical position for locking the catching means in order to establish the connection between the coupling bodies. Further the coupling bracket is configured to cover at least part of one of the coupling bodies being inserted into the other of the coupling bodies, at least the receiving one of the coupling bodies providing catching means for establishing a connection to the coupling bracket. Further the coupling bracket provides corresponding catching means for establishing a connection between the coupling bracket and at least the receiving one of the coupling bodies.

The invention concerns a coupling arrangement with a kind of quick connector, to be easily assembled, between two ducts, where the tightness is achieved, e.g. by an O-ring and the retention, e.g. by a clipped part. Applications may be high pressure ducts, in particular charge air ducts.

The inventive coupling arrangement allows connecting, e.g., a blow molded part with an injected part of a charge air duct with a quick, compact, simple and inexpensive solution. The coupling arrangement is comparable in terms of cost with a welded solution, but without the risk of a welded solution for high pressure ducts. Materials do not need to be weld compatible, so the materials selection is not anymore limited. No band clamp screwing or complex rubber cuffs are required for sealing, only a standard O-ring is sufficient for sealing. The assembly can be achieved manually by an operator, or with a minimum help for the clipping. Manufacturing tooling is simple. The coupling arrangement is less complex and more compact than a clamped solution. No expensive purchased parts, like HENN connectors or complex geometrical VDA connectors are needed. The coupling bodies and the coupling bracket are mounted together by connecting the corresponding catching means. One of the coupling bodies is inserted in the first geometrical position into the other of the coupling bodies, which is a position where geometrical axes of the coupling bodies are tilted against each other. Then if the corresponding catching means are inserted into each other the geometrical axes are put parallel to each other in the second geometrical position so that the catching means are connected in a lock type connection. Afterwards the coupling bracket is mounted around the connected coupling bodies in a coupling region by connecting the corresponding catching means of the coupling bodies and the coupling bracket in a lock type manner. Thus a rigid coupling connection is achieved.

According to an advantageous embodiment, the coupling bracket in a position connected to the coupling bodies may be configured to at least partially close a circumference of the body portion of the receiving coupling body, in particular is configured to form a part of a wall of the body portion of the receiving coupling body. Thus the body portion of the receiving coupling body is additionally supplemented reinforcing by this way the stiffness of the coupling arrangement as a whole.

According to an advantageous embodiment, a bushing may be inserted into the insertable coupling body to reinforce the body part of the coupling body. Especially if the coupling body is manufactured by blow molding the stiffness of the coupling body is limited by the plastic material used typically for blow molding. Thus in order to enlarge the stiffness of the coupling part for establishing the lock type connection of the corresponding catching means it can be useful to insert a stiff body like a bushing made from a metallic or a plastic material into the coupling body.

According to an advantageous embodiment, the coupling bracket may have catching means being connectable to catching means of the inserted insertable coupling body in the region where the coupling bracket covers a portion of the inserted coupling body. These catching means may serve for additional fixing of the inserted coupling body to the receiving coupling body, thus additionally reinforcing the connection between the two coupling bodies.

According to an advantageous embodiment, the coupling bracket may have an axial extension providing catching means being connectable to catching means of the receiving coupling body. These catching means may serve for additional fixing of the coupling bracket to the receiving coupling body, thus additionally reinforcing the connection between the receiving coupling body and the coupling bracket in an axial direction.

According to an advantageous embodiment, a distal segment of the receiving coupling body and a proximal segment of the insertable coupling body are configured as a sealing area where a seal is arranged between the segments. Favorably a part of the body part of the coupling bodies may be configured as a sealing area by using a part which is not directly situated at the front end. By using the distal segment of the receiving coupling body and the proximal segment of the inserted coupling body the sealing area is elongated from the front end. Thus the sealing in the sealing area is protected against mechanical movements and violations. At least one of the segments may be provided with a groove for holding the seal in a fixed position for mounting.

Favorably, the catching means of one of the coupling bodies for connecting the other of the coupling bodies may be configured as retention pads, whereas the catching means of the other of the coupling bodies are configured as retention slots. This kind of connection for the catching means enables an easy way of establishing a lock type connection between the coupling bodies. The retention slots may be configured as a groove on at least part of an outer circumference of the coupling body. This enables geometrical positioning around the axis of the coupling bodies.

Also, the catching means of the coupling bracket for connecting one of the coupling bodies may be favorably configured as retentions slots corresponding to retention pads of the coupling body and clipping nails corresponding to clipping windows of the coupling body, whereas the catching means of the coupling bracket for connecting the other of the coupling bodies may be configured as retention pads corresponding to retentions slots of the coupling body. This kind of connection for the catching means enables an easy way of establishing a lock type connection between the coupling bodies and the coupling bracket.

According to the invention, in the first geometrical position one of the coupling bodies is tilted with an axis against an axis of the other coupling body for introducing the insertable coupling body into the receiving coupling body. For mounting of the two coupling bodies it may be convenient to tilt one of the coupling bodies against the axis of the other of the coupling bodies. Thus it is possible to insert one of the coupling bodies into the front end of the other coupling body ensuring that the catching means are not hindering the insertion process. Also the sealing areas are kept free of engaging one another with the seal being tightened.

According to the invention, in the second geometrical position the axis of one of the coupling bodies is parallel to the axis of the other coupling body for locking the catching means of the coupling bodies. If the coupling bodies are moved to an inline position where the geometrical axes of the coupling bodies are parallel to each other the corresponding catching means can be clipped together thus locking the connection between the two coupling bodies. This connection is ensured to be kept without the risk of loosen by an accidental motion.

A coupling body for usage in a coupling arrangement is proposed, comprising at least two segments, one proximal segment proximal to a front end and one distal segment in a distance from the front end, which is configured as a receiving coupling body of the coupling arrangement, wherein catching means are arranged at its proximal segment. This coupling body serves as a first partner of the proposed coupling arrangement for establishing a quasi-rigid connection between gas pipes, in particular for charge air ducts.

According to an advantageous embodiment, additionally catching means may be arranged on an outer circumference of the distal segment for connecting the coupling bracket in axial direction.

Favorably the catching means of the receiving coupling body may be configured as retention pads and clipping windows and/or retention pads for establishing a lock type connection between the coupling bodies and the coupling bracket. Nevertheless the catching means of the receiving coupling body may also be configured in an alternative manner as retentions slots and clipping nails and/or retention slots, respectively, whereas retention pads and clipping windows may be configured on the other connection components.

According to an advantageous embodiment, the coupling body being configured as a receiving coupling body of the coupling arrangement may be manufactured as an injection molded plastic part. Injection molding is a quick and easy process for manufacturing plastic parts and delivers relatively stiff plastic components which may favorably serve as receiving components of the coupling arrangement. Also geometrical dimensions on an inner and an outer side of the component are precisely controllable by the injection molding process.

A coupling body for usage in a coupling arrangement is proposed, comprising at least two segments, one proximal segment proximal to a front end and one distal segment in a distance from the front end, which is configured as an insertable coupling body of the coupling arrangement, where catching means are arranged at its distal segment, and where a sealing groove being configured at the proximal segment, a seal being arranged in the sealing groove. This coupling body serves as a second partner of the proposed coupling arrangement for establishing a quasi-rigid between gas pipes, in particular for charge air ducts.

Favorably the catching means of the insertable coupling body may be configured as retention slots for establishing a lock type connection between the coupling bodies and the coupling bracket. Nevertheless the catching means of the insertable coupling body may also be configured in an alternative manner as retentions pads and retentions slots on the receiving coupling body.

According to an advantageous embodiment, the coupling body being configured as an insertable coupling body of the coupling arrangement may be manufactured as a blow molded plastic part. Blow molding is a quick and easy process for manufacturing plastic parts and delivers softer plastic components which may favorably serve as insertable components of the coupling arrangement. Also geometrical dimensions on an outer side of the component are precisely controllable by the blow molding process, whereas geometrical dimensions on an inner side of the component may vary due to less control during the blow molding process.

A coupling bracket for usage in a coupling arrangement is proposed, comprising at least a bracket part and an axial extension, which is configured to cover at least a part of one of the coupling bodies being inserted into the other of the coupling bodies by the bracket part, wherein catching means are arranged at its bracket part for connection to the receiving coupling body. This coupling body serves as a third partner of the proposed coupling arrangement for establishing a quasi-rigid connection between gas pipes, in particular for charge air ducts.

According to an advantageous embodiment, additionally catching means may be arranged at the bracket part for connection to the inserted coupling body in order to reinforce the axial connection of the coupling bracket to the inserted coupling body.

According to an advantageous embodiment, the coupling bracket may comprise an axial extension, wherein catching means are arranged at its axial extension for connection to the receiving coupling body. These catching means may serve for additional fixing of the coupling bracket to the receiving coupling body, thus additionally reinforcing the connection between the receiving coupling body and the coupling bracket in an axial direction.

Favorably the catching means of the coupling bracket may be configured as retention pads and clipping nails and/or retention slots for establishing a lock type connection between the coupling bodies and the coupling bracket. Nevertheless the catching means of the coupling bracket may also be configured in an alternative manner as retentions slots and clipping windows and/or retention pads, respectively, whereas retention pads and clipping nails and/or retention slots, respectively may be configured on the other connection components.

According to an advantageous embodiment, the coupling bracket may be manufactured as an injection molded plastic part. Injection molding is a quick and easy process for manufacturing plastic parts and delivers relatively stiff plastic components which may favorably serve as an embracing coupling bracket of the coupling arrangement. Also geometrical dimensions on an inner and an outer side of the component are precisely controllable by the injection molding process.

According to an advantageous embodiment, fixing means may be integrated into the coupling bracket for fixation of the coupling arrangement to a surrounding. The coupling bracket can additionally include further features if requested by the application, which may be, e.g. cable holders or fixing points to a vehicle or means for fixation in a surrounding environment.

According to another aspect of the invention a pipe arrangement is proposed, comprising at least one quasi-rigid connection between pipes, in particular a charge air duct arrangement, comprising a coupling arrangement as described.

### Brief Description of the Drawings

The present invention together with the above-mentioned and other objects and advantages may best be understood from the following detailed description of the embodiments, but not restricted to the embodiments, wherein is shown in:
- Figure 1: an example embodiment of components of a coupling arrangement according to the invention in an exploded view;
- Figure 2: in a cut view an embodiment of a coupling arrangement according to the invention in a mutual second geometrical position of a mounted state;
- Figure 3: in a partly cut isometric view the assembled coupling arrangement shown in Figure 2;
- Figure 4: in an isometric view a receiving coupling body with an assembled coupling bracket of a coupling arrangement according to an embodiment of the invention;
- Figure 5: in an isometric view an insertable coupling body of a coupling arrangement according to an embodiment of the invention;
- Figure 6: in a cross section the mounted coupling arrangement shown in Figure 2;
- Figure 7: in another cross section the mounted coupling arrangement shown in Figure 2; and
- Figure 8: in an exploded view an assembly process of the coupling arrangement according to an embodiment of the invention.

### Detailed Description of the Drawings

In the drawings, like elements are referred to with equal reference numerals. The drawings are merely schematic representations, not intended to portray specific parameters of the invention. Moreover, the drawings are intended to depict only typical embodiments of the invention and therefore should not be considered as limiting the scope of the invention.

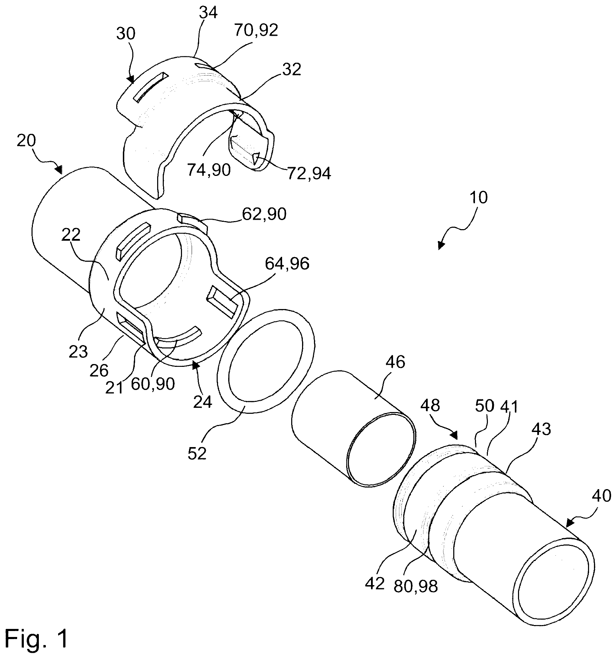

Figure 1 illustrates an example embodiment of components of a coupling arrangement 10 for establishing a quasi-rigid connection between gas pipes, in particular for charge air ducts, according to the invention in an exploded view. The coupling arrangement 10 comprises a first coupling body 20, a second coupling body 40 and a coupling bracket 30. The second coupling body 40 is configured to be insertable with a body portion 42 into a body portion 22 of the first coupling body 20 with its front end 48 through a front end 24 of the receiving coupling body 20. The coupling bodies 20, 40 provide corresponding catching means 60, 80 for establishing a mutual connection between the coupling bodies 20, 40, at least between the body portions 22, 42 of the coupling bodies 20, 40 being in mutual engagement. The catching means 60 are configured as retentions pads 90 and the catching means 80 are configured as retention slots 92 in the form of a groove 98. The coupling bracket 30 is configured to cover at least a part of the insertable coupling body 40 when it is inserted into the receiving coupling body 20. The coupling bodies 20, 40 provide catching means 62, 64, 80 for establishing a connection to the coupling bracket 30, where catching means 62 are configured as retention pads 90, catching means 64 as clipping windows 96 and catching means 80 as a groove 98. The coupling bracket 30 provides corresponding catching means 70, 72, 74 for establishing a connection between the coupling bracket 30 and the coupling bodies 20, 40, where catching means 70 are configured as retentions slots 92, catching means 72 as clipping nails 94 and catching means 74 as retention pads 90. The catching means 70, 72 of the coupling bracket 30 are hereby connectable to the catching means 62, 64 of the receiving coupling body 20, and the catching means 74 are connectable to the catching means 80 of the insertable coupling body 40.

The coupling bracket 30 in a position connected to the coupling bodies 20, 40 is configured to at least partially close a circumference of the body portion 22 of the receiving coupling body 20 when in a position connected to the coupling bodies 20, 40. The coupling bracket 30 bridges an open part of a wall 26 of the receiving coupling body 20, thus forming a part of the outer wall 26 of the body portion 22 of the coupling body 20 in a position connected to the coupling bodies 20, 40.

The coupling body 20 comprises two segments 21, 23, one proximal segment 21 proximal to a front end 24 and one distal segment 23 in a distance from the front end 24. The coupling body 20 is configured as a receiving coupling body 20 of the coupling arrangement 10. Catching means 60, 64 are arranged at its proximal segment 21, and catching means 62 are arranged on an outer circumference of the distal segment 23. The coupling body 20 may be manufactured as an injection molded plastic part.

The coupling body 40 comprises two segments 41, 43, one proximal segment 41 proximal to a front end 48 and one distal segment 43 in a distance from the front end 48. The coupling body 40 is configured as an insertable coupling body 40 of the coupling arrangement 10. Catching means 80 are arranged at its distal segment 41, and a sealing groove 50 is configured at the proximal segment 41, with a seal 52 being arranged in the sealing groove 50. A bushing 46 is inserted into the coupling body 40 to reinforce the body part 42 of the coupling body 40. The coupling body 40 may be manufactured as a blow molded plastic part.

The coupling bracket 30 comprises a bracket part 32 and an axial extension 34, and is configured to cover at least a part of the insertable coupling body 40 inserted into the receiving coupling body 20 with the bracket part 32. The bracket part 32 bridges an open part in the circumference of the receiving coupling body 20. Catching means 72, 74 are arranged at its bracket part 32, and catching means 70 are arranged at its axial extension 34.

The coupling bracket 30 may be manufactured as an injection molded plastic part. Further fixing means (not shown) may be integrated into the coupling bracket for fixation of the coupling arrangement 10 to a surrounding, for example cable holders or fixing points to a vehicle.

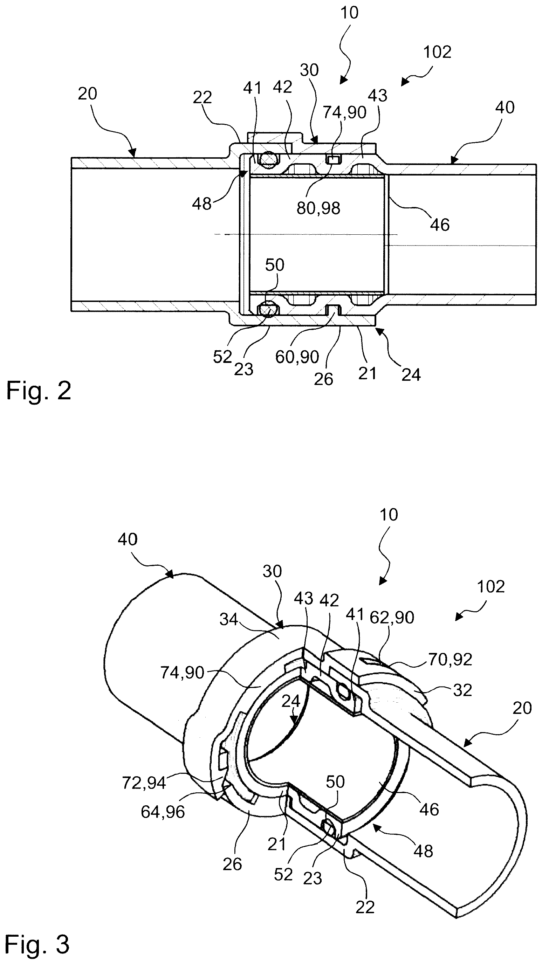

Figure 2 depicts in a cut view an embodiment of a coupling arrangement 10 according to the invention in a mutual second geometrical position 102 of an assembled state. The coupling body 40 is inserted with its front end 48 into the front end 24 of the receiving coupling body 20. The coupling body 40 is reinforced by the inserted bushing 46 from an inner side. The coupling bodies 20, 40 are connected via the catching means 60, 80, which are in a locked position because the coupling arrangement 10 is shown in its assembled state. The coupling bracket 30 is mounted to partly surround the two coupling bodies 20, 40 on the circumference in order to stabilize the coupling arrangement 10. Catching means 74 of the coupling bracket are also in a locked state with the catching means 80 of the coupling body 40. The distal segment 23 of the receiving coupling body 20 and the proximal segment 41 of the insertable coupling body 40 is configured as a sealing area where a seal 52 is arranged between the segments 23, 41. The seal 52 is arranged in the seal groove 50 of the coupling part 40.

Figure 3 illustrates in a partly cut isometric view the assembled coupling arrangement 10 shown in Figure 2. In this view the other catching means 70, 72 of the coupling bracket 30 are to be seen in a state locked with the catching means 62 and 64 of the coupling body 20. Thus the coupling bodies 20, 40 as well as the coupling bracket 30 are connected in a locked type manner by the catching means 60, 80, 62, 64, 70, 72, 74. The coupling arrangement 10 also ensures a tight connection by the seal 52 sealing the connection of the coupling bodies 20, 40 between the segments 23 and 41.

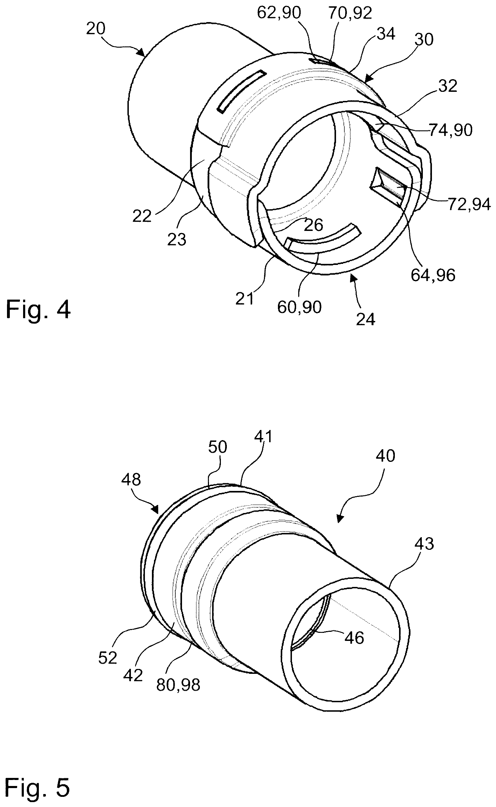

Figure 4 depicts in an isometric view a receiving coupling body 20 with a mounted coupling bracket 30. In the detailed view the connection of the catching means 70, 72 of the coupling bracket 30 with the catching means 62, 64 of the coupling body 20 is illustrated. Thus the coupling bracket 30 partially closes the circumference of the body portion 22 of the coupling body 20 in order to form part of the wall 26.

Figure 5 shows in an isometric view an insertable coupling body 40.

The bushing 46 is inserted into the coupling body 40 to reinforce the stiffness. The catching means 80 are configured as a continuous groove 98 around the circumference of the coupling body 40. The seal 52 is arranged in the groove 50 located In the proximal segment 41 of the coupling body 40.

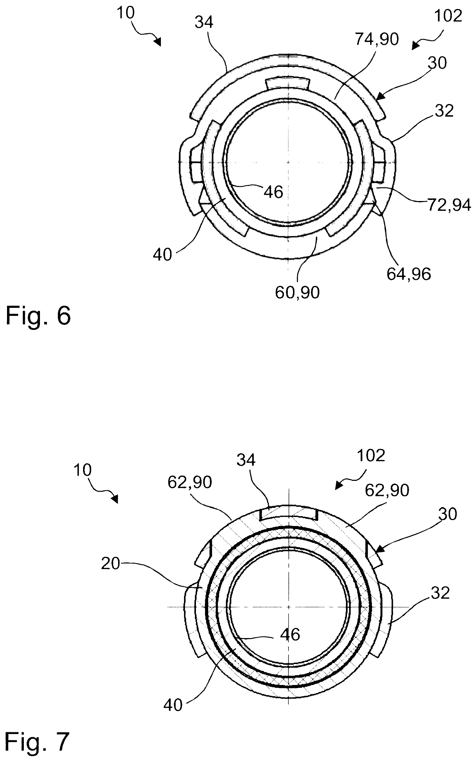

Figure 6 depicts in a cross section the assembled coupling arrangement 10 shown in Figure 2. The coupling bracket 30 covers a part of the circumference of the coupling bodies 20, 40. The catching means 72 and 64 are fixed in a locked type manner by locking the clipping nails 94 in the clipping windows 96. Retention pads 90 as catching means 60 and 74 are depicted in a locked state in this cut view.

Figure 7 depicts in another cross section the assembled coupling arrangement 10 shown in Figure 2. In this cut view the retention pads 90 as catching means 62 to connect the coupling bracket 30 to the coupling body 20 are to be seen in a locked state.

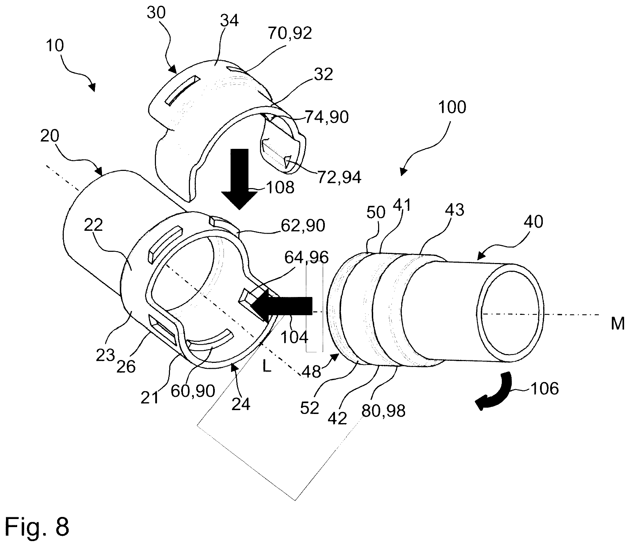

Figure 8 illustrates in an exploded view an assembly process of the coupling arrangement 10 according to an embodiment of the invention. The coupling bodies 20, 40 provide a mutual first geometrical position 100 for introducing the insertable coupling body 40 into the receiving coupling body 20, as well as a mutual second geometrical position 102 for locking the catching means 60, 80. For mounting the coupling body 40 to the coupling body 20, the coupling body 40 is tilted with the axis M in the first geometrical position 100 against the axis L of the other coupling body 20 for introducing the insertable coupling body 40 into the receiving coupling body 20. The coupling body 40 is inserted along the direction 104 in order to keep the catching means 60, 80 in an unengaged state by providing clearance between the catching means 60, 80. If the front end 48 of the coupling body 40 has reached the distal segment 23 of the coupling body 20, the coupling body 40 is tilted along the direction 106 into the second geometrical position 102 in order to arrange the coupling body 40 with its axis M parallel to the coupling body 20 with its axis L thus bringing the catching means 60 and 80 into engagement with each other. Also the seal 52 is arranged in the sealing area of the segments 23 and 41 in order to establish its sealing function. Thus the catching means 60, 80 of the coupling bodies 20, 40 are in a locked state. Next the coupling bracket 30 is lowered down on along direction 108 to the coupling bodies 20, 40 in the connected state grasping around the coupling bodies 20, 40. The catching means 70, 72, 74 are brought into engagement with the catching means 62, 64 of the coupling body 20 and with the catching means 80 of the coupling body 40. By this way the coupling arrangement 10 is assembled in a locked state of the catching means 60, 80, 72, 74, 76 and sealed.

## Claims

1. A coupling arrangement (10) having a first coupling body (20) comprising at least two segments (21, 23), one proximal segment (21) proximal to a front end (24) and one distal segment (23) in a distance from the front end (24), being configured as a receiving coupling body (20) of the coupling arrangement (10), wherein catching means (60, 64) comprising first catching means (60) and second catching means (64) are arranged at its proximal segment (21), a second coupling body (40) comprising at least two segments (41, 43), one proximal segment (41) proximal to a front end (48) and one distal segment (43) in a distance from the front end (48), being configured as an insertable coupling body (40) of the coupling arrangement (10), wherein third catching means (80) are arranged at its distal segment (41), and wherein a sealing groove (50) being configured at the proximal segment (41), a seal (52) being arranged in the sealing groove (50) and a coupling bracket (30) comprising at least a bracket part (32), being configured to cover at least a part of one of the coupling bodies (40) inserted into the other of the coupling bodies (20), wherein forth catching means (72) are arranged at its bracket part (32) for connection to the receiving coupling body (20), with
(i) one of the coupling bodies (40) being insertable with a body portion (42) into a body portion (22) of the other of the coupling bodies (20) with its front end (48) through a front end (24) of the receiving coupling body (20),
(ii) the coupling bodies (20, 40) providing corresponding catching means, which are said first catching means (60) and said third catching means (80), for establishing a connection between the coupling bodies (20, 40), the coupling bodies (20, 40) providing a mutual first geometrical position (100) for introducing the insertable coupling body (40) into the receiving coupling body (20),
(iii) the coupling bodies (20, 40) providing a mutual second geometrical position (102) for locking the catching means (60, 80) in order to establish the connection between the coupling bodies (20, 40),
(iv) the coupling bracket (30) being configured to cover at least a part of one of the coupling bodies (40) being inserted into the other of the coupling bodies (20),
(v) at least the receiving one of the coupling bodies (20) providing said second catching means 64) for establishing a connection to the coupling bracket (30),
(vi) the coupling bracket (30) providing corresponding catching means (72), which are said forth catching means (72), for establishing a connection between the coupling bracket (30) and at least the receiving one of the coupling bodies (20),
wherein in the first geometrical position (100) one of the coupling bodies (40) is tilted with an axis (M) against an axis (L) of the other coupling body (20) for introducing the insertable coupling body (40) into the receiving coupling body (20),
wherein in the second geometrical position (102) the axis (M) of one of the coupling bodies (40) is parallel to the axis (L) of the other coupling body (20) for locking the catching means (60, 80) of the coupling bodies (20, 40).

2. The coupling arrangement according to claim 1, wherein the coupling bracket (30) in a position connected to the coupling bodies (20, 40) is configured to at least partially close a circumference of the body portion (22) of the receiving coupling body (20), in particular is configured to form a part of a wall (26) of the body portion (22) of the receiving coupling body (20).

3. The coupling arrangement according to claim 1 or 2, wherein a bushing (46) is inserted into the insertable coupling body (40) to reinforce the body part (42) of the coupling body (40).

4. The coupling arrangement according to any one of the preceding claims, wherein the coupling bracket (30) has fifth catching means (74) being connectable to said third catching means (80) of the inserted insertable coupling body (40) in the region where the coupling bracket (30) covers the inserted coupling body (40).

5. The coupling arrangement according to any one of the preceding claims, wherein the coupling bracket (30) has an axial extension (34) providing sixth catching means (70) being connectable to seventh catching means (62) of the receiving coupling body (20).

6. The coupling arrangement according to any one of the preceding claims, wherein a distal segment (23) of the receiving coupling body (20) and a proximal segment (41) of the insertable coupling body (40) are configured as a sealing area where a seal (52) is arranged between the segments (23, 41).

7. The coupling arrangement according to any one of the preceding claims, wherein the coupling body (20) comprises seventh catching means (62), wherein the catching means are arranged on an outer circumference of the distal segment (23).

8. The coupling arrangement according to any one of claims 1 to 7, wherein the coupling bracket (30) comprises fifth catching means (74), wherein said fifth catching means (74) are arranged at its bracket part (32) for connection to the inserted coupling body (40).

9. The coupling arrangement according to claim 8, wherein the coupling bracket (30) comprises an axial extension (34), wherein sixth catching means (70) are arranged at its axial extension (34) for connection to the receiving coupling body (20).

10. A pipe arrangement comprising at least one quasi-rigid connection between pipes, in particular a charge air duct arrangement, comprising a coupling arrangement (10) according to any one of the claims 1 to 7.

## Patentansprüche

1. Kupplungsanordnung (10) mit einem ersten Kupplungskörper (20), der wenigstens zwei Segmente (21, 23), ein proximales Segment (21) proximal zu einem vorderen Ende (24) und ein distales Segment (23) in einem Abstand von dem vorderen Ende (24) umfasst, der als aufnehmender Kupplungskörper (20) der Kupplungsanordnung (10) ausgebildet ist, wobei Befestigungsmittel (60, 64), die erste Befestigungsmittel (60) und zweite Befestigungsmittel (64) umfassen, an ihrem proximalen Segment (21) angeordnet sind, einem zweiten Kupplungskörper (40), der wenigstens zwei Segmente (41, 43), ein proximales Segment (41) proximal zu einem vorderen Ende (48) und ein distales Segment (43) in einem Abstand von dem vorderen Ende (48) umfasst, der als ein einsetzbarer Kupplungskörper (40) der Kupplungsanordnung (10) ausgebildet ist, wobei an seinem distalen Segment (41) dritte Befestigungsmittel (80) angeordnet sind, und wobei am proximalen Segment (41) eine Dichtnut (50) ausgebildet ist, in der (50) eine Dichtung (52) angeordnet ist und ein Kupplungsbügel (30) wenigstens ein Bügelteil (32) umfasst, das ausgebildet ist, um wenigstens einen Teil eines der in den anderen der Kupplungskörper (20) eingesetzten Kupplungskörper (40) abzudecken, wobei an seinem Bügelteil (32) vierte Befestigungsmittel (72) zur Verbindung mit dem aufnehmenden Kupplungskörper (20) angeordnet sind, mit
(i) einem der Kupplungskörper (40), der mit einem Körperabschnitt (42) in einen Körperabschnitt (22) des anderen der Kupplungskörper (20) mit seinem vorderen Ende (48) durch ein vorderes Ende (24) des aufnehmenden Kupplungskörpers (20) einsetzbar ist,
(ii) den Kupplungskörpern (20, 40), die entsprechende Befestigungsmittel bereitstellen, welche die ersten Befestigungsmittel (60) und die dritten Befestigungsmittel (80) sind, um eine Verbindung zwischen den Kupplungskörpern (20, 40) herzustellen, die (20, 40) eine gemeinsame erste geometrische Position (100) zum Einführen des einsetzbaren Kupplungskörpers (40) in den aufnehmenden Kupplungskörper (20) bereitstellen,
(iii) den Kupplungskörpern (20, 40), die eine gemeinsame zweite geometrische Position (102) zum Verriegeln der Befestigungsmittel (60, 80) bereitstellen, um die Verbindung zwischen den Kupplungskörpern (20, 40) herzustellen,
(iv) dem Kupplungsbügel (30), der konfiguriert ist, um wenigstens einen Teil eines der Kupplungskörper (40) abzudecken, der in den anderen der Kupplungskörper (20) eingesetzt ist,
(v) wenigstens dem einen der aufnehmenden Kupplungskörper (20), der die zweiten Befestigungsmittel (64) zum Herstellen einer Verbindung mit dem Kupplungsbügel (30) bereitstellt,
(vi) dem Kupplungsbügel (30), der entsprechende Befestigungsmittel (72) bereitstellt, welche die vierten Befestigungsmittel (72) sind, um eine Verbindung zwischen dem Kupplungsbügel (30) und wenigstens dem einen der aufnehmenden Kupplungskörper (20) herzustellen,
wobei in der ersten geometrischen Position (100) einer der Kupplungskörper (40) mit einer Achse (M) gegen eine Achse (L) des anderen Kupplungskörpers (20) zum Einführen des einsetzbaren Kupplungskörpers (40) in den aufnehmenden Kupplungskörper (20) geneigt wird,
wobei in der zweiten geometrischen Position (102) die Achse (M) eines der Kupplungskörper (40) parallel zur Achse (L) des anderen Kupplungskörpers (20) verläuft, um die Befestigungsmittel (60, 80) der Kupplungskörper (20, 40) zu verriegeln.

2. Kupplungsanordnung nach Anspruch 1, wobei der Kupplungsbügel (30) in einer mit den Kupplungskörpern (20, 40) verbundenen Position konfiguriert ist, um einen Umfang des Körperabschnitts (22) des aufnehmenden Kupplungskörpers (20) wenigstens teilweise zu schließen, insbesondere konfiguriert ist, um einen Teil einer Wand (26) des Körperabschnitts (22) des aufnehmenden Kupplungskörpers (20) zu bilden.

3. Kupplungsanordnung nach Anspruch 1 oder 2, wobei eine Buchse (46) in den einsetzbaren Kupplungskörper (40) eingesetzt wird, um den Körperteil (42) des Kupplungskörpers (40) zu verstärken.

4. Kupplungsanordnung nach einem der obigen Ansprüche, wobei der Kupplungsbügel (30) fünfte Befestigungsmittel (74) hat, die mit den dritten Befestigungsmitteln (80) des eingesetzten einsetzbaren Kupplungskörpers (40) in dem Bereich verbindbar sind, in dem der Kupplungsbügel (30) den eingesetzten Kupplungskörper (40) abdeckt.

5. Kupplungsanordnung nach einem der obigen Ansprüche, wobei der Kupplungsbügel (30) einen axialen Fortsatz (34) aufweist, der sechste Befestigungsmittel (70) bereitstellt, die mit den siebten Befestigungsmitteln (62) des aufnehmenden Kupplungskörpers (20) verbindbar sind.

6. Kupplungsanordnung nach einem der obigen Ansprüche, wobei ein distales Segment (23) des aufnehmenden Kupplungskörpers (20) und ein proximales Segment (41) des einsetzbaren Kupplungskörpers (40) als Dichtfläche ausgebildet sind, wo eine Dichtung (52) zwischen den Segmenten (23, 41) angeordnet ist.

7. Kupplungsanordnung nach einem der obigen Ansprüche, wobei der Kupplungskörper (20) siebte Befestigungsmittel (62) umfasst, wobei die Befestigungsmittel auf einem Außenumfang des distalen Segments (23) angeordnet sind.

8. Kupplungsanordnung nach einem der Ansprüche 1 bis 7, wobei der Kupplungsbügel (30) fünfte Befestigungsmittel (74) umfasst, wobei die fünften Befestigungsmittel (74) an ihrem Bügelteil (32) zur Verbindung mit dem eingesetzten Kupplungskörper (40) angeordnet sind.

9. Kupplungsanordnung nach Anspruch 8, wobei der Kupplungsbügel (30) einen axialen Fortsatz (34) umfasst, wobei an seinem axialen Fortsatz (34) sechste Befestigungsmittel (70) zur Verbindung mit dem aufnehmenden Kupplungskörper (20) angeordnet sind.

10. Rohranordnung mit wenigstens einer quasistarren Verbindung zwischen Rohren, insbesondere einer Ladeluftkanalanordnung, die eine Kupplungsanordnung (10) nach einem der Ansprüche 1 bis 7 umfasst.

## Revendications

1. Agencement de couplage (10) ayant un premier corps de couplage (20) comprenant au moins deux segments (21, 23), un segment proximal (21) proximal à une extrémité avant (24) et un segment distal (23) à une certaine distance de l'extrémité avant (24), qui est configuré en tant que corps de couplage de réception (20) de l'agencement de couplage (10), dans lequel des moyens d'accrochage (60, 64) comprenant des premiers moyens d'accrochage (60) et des deuxièmes moyens d'accrochage (64) sont disposés au niveau de son segment proximal (21), un deuxième corps de couplage (40) comprenant au moins deux segments (41, 43), un segment proximal (41) proximal à une extrémité avant (48) et un segment distal (43) à une certaine distance de l'extrémité avant (48), qui est configuré en tant que corps de couplage insérable (40) de l'agencement de couplage (10), dans lequel des troisièmes moyens d'accrochage (80) sont disposés au niveau de son segment distal (41), et dans lequel une rainure d'étanchéité (50) étant configurée au niveau du segment proximal (41), un joint (52) étant disposé dans la rainure d'étanchéité (50) et un support d'accouplement (30) comprenant au moins une partie de support (32), étant configuré pour couvrir au moins une partie de l'un des corps de couplage (40) insérés dans l'autre des corps de couplage (20), dans lequel des quatrièmes moyens d'accrochage (72) sont disposés au niveau de sa partie de support (32) pour raccordement au corps de couplage de réception (20), avec
(i) l'un des corps de couplage (40) pouvant être inséré avec une partie de corps (42) dans une partie de corps (22) de l'autre des corps de couplage (20) avec son extrémité avant (48) à travers une extrémité avant (24) du corps de couplage de réception (20),
(ii) les corps de couplage (20, 40) fournissant des moyens d'accrochage correspondants, qui sont lesdits premiers moyens d'accrochage (60) et lesdits troisièmes moyens d'accrochage (80), pour établir un raccordement entre les corps de couplage (20, 40), les corps de couplage (20, 40) fournissant une première position géométrique mutuelle (100) pour introduire le corps de couplage insérable (40) dans le corps de couplage de réception (20),
(iii) les corps de couplage (20, 40) fournissant une seconde position géométrique mutuelle (102) pour verrouiller les moyens d'accrochage (60, 80) afin d'établir le raccordement entre les corps de couplage (20, 40),
(iv) le support de couplage (30) étant configuré pour couvrir au moins une partie de l'un des corps de couplage (40) étant inséré dans l'autre des corps de couplage (20),
(v) au moins celui de réception parmi les corps de couplage (20) fournissant lesdits deuxièmes moyens d'accrochage (64) pour établir un raccordement au support de couplage (30),
(vi) le support de couplage (30) fournissant des moyens d'accrochage correspondants (72), qui sont lesdits quatrièmes moyens d'accrochage (72), pour établir un raccordement entre le support de couplage (30) et au moins celui de réception parmi les corps de couplage (20),
dans lequel, dans la première position géométrique (100), l'un des corps de couplage (40) est incliné avec un axe (M) contre un axe (L) de l'autre corps de couplage (20) pour introduire le corps de couplage insérable (40) dans le corps de couplage de réception (20),
dans lequel, dans la deuxième position géométrique (102), l'axe (M) de l'un des corps de couplage (40) est parallèle à l'axe (L) de l'autre corps de couplage (20) pour verrouiller les moyens d'accrochage (60, 80) des corps de couplage (20, 40).

2. Agencement de couplage selon la revendication 1, dans lequel le support de couplage (30), dans une position raccordée aux corps de couplage (20, 40), est configuré pour fermer au moins partiellement une circonférence de la partie de corps (22) du corps de couplage de réception (20), en particulier est configuré pour former une partie d'une paroi (26) de la partie de corps (22) du corps de couplage de réception (20).

3. Agencement de couplage selon la revendication 1 ou 2, dans lequel une douille (46) est insérée dans le corps de couplage insérable (40) pour renforcer la partie de corps (42) du corps de couplage (40).

4. Agencement de couplage selon l'une quelconque des revendications précédentes, dans lequel le support de couplage (30) a des cinquièmes moyens d'accrochage (74) pouvant être raccordés auxdits troisièmes moyens d'accrochage (80) du corps de couplage insérable inséré (40) dans la région où le support de couplage (30) couvre le corps de couplage inséré (40).

5. Agencement de couplage selon l'une quelconque des revendications précédentes, dans lequel le support de couplage (30) a une extension axiale (34) fournissant des sixièmes moyens d'accrochage (70) pouvant être raccordés à des septièmes moyens d'accrochage (62) du corps de couplage de réception (20).

6. Agencement de couplage selon l'une quelconque des revendications précédentes, dans lequel un segment distal (23) du corps de couplage de réception (20) et un segment proximal (41) du corps de couplage insérable (40) sont configurés en tant que zone d'étanchéité où un joint (52) est disposé entre les segments (23, 41).

7. Agencement de couplage selon l'une quelconque des revendications précédentes, dans lequel le corps de couplage (20) comprend des septièmes moyens d'accrochage (62), dans lequel les moyens d'accrochage sont disposés sur une circonférence externe du segment distal (23).

8. Agencement de couplage selon l'une quelconque des revendications 1 à 7, dans lequel le support de couplage (30) comprend des cinquièmes moyens d'accrochage (74), dans lequel lesdits cinquièmes moyens d'accrochage (74) sont agencés au niveau de sa partie de support (32) pour raccordement au corps de couplage inséré (40).

9. Agencement de couplage selon la revendication 8, dans lequel le support de couplage (30) comprend une extension axiale (34), dans lequel des sixièmes moyens d'accrochage (70) sont agencés au niveau de son extension axiale (34) pour raccordement au corps de couplage de réception (20).

10. Agencement de tuyaux comprenant au moins un raccordement quasi rigide entre des tuyaux, en particulier un agencement de conduit d'air de suralimentation, comprenant un agencement de couplage (10) selon l'une quelconque des revendications 1 à 7.
